# EUROPÄISCHE PATENTSCHRIFT

(11) **EP 2 646 703 B1**
(45) Veröffentlichungstag und Bekanntmachung des Hinweises auf die Patenterteilung: **04.03.2015**
(21) Anmeldenummer: 11781747.8
(22) Anmeldetag: 29.10.2011
(51) Int. Cl.: F16D 3/205

(54) **TRIPODE-ROLLELEMENT MIT FEDERRING**
TRIPOD ROLLING ELEMENT WITH SPRING RING
ÉLÉMENT DE ROULEMENT DE TRIPODE À ANNEAU ÉLASTIQUE

(30) Priorität: 04.12.2010 DE 102010053480
(43) Veröffentlichungstag der Anmeldung: 09.10.2013
(73) Patentinhaber: Volkswagen Aktiengesellschaft, 38436 Wolfsburg (DE)
(72) Erfinder: ZORNHAGEN, Marco, 38302 Wolfenbüttel (DE); MICK, Alexander, 38446 Wolfsburg (DE)
(86) Internationale Anmeldenummer: PCT/EP2011/005480
(87) Internationale Veröffentlichungsnummer: WO 2012/072169

(56) Entgegenhaltungen:
- DE-A1-102007 059 378
- GB-A- 2 199 638
- US-A- 5 073 144

## Beschreibung

Die vorliegende Erfindung betrifft ein Rollelement eines Tripodegelenks, sowie ein Tripodegelenk, das mindestens ein Rollelement aufweist, wobei das Rollelement ein Gehäuse, bestehend aus zumindest einem ersten und einem zweiten Gehäuseteil sowie einem Gehäuseinnenkörper, und Wälzkörper aufweist, die zur Abstützung an einander gegenüberliegenden Laufbahnen eines Gelenkaußenteils des Tripodegelenks ausgestaltet sind. Der Gehäuseinnenkörper des Gehäuses weist ferner eine Aufnahmeöffnung zur Lagerung eines Zapfens eines Tripodesterns des Tripodegelenks auf.

Durch Tripodegelenke ist es möglich, ein Drehmoment von einer antreibenden auf eine abtreibende Welle zu übertragen. Die Achsen der Welle können durch die Verwendung von Tripodegelenken dabei zueinander einen stumpfen Winkel einschließen. Ein Tripodegelenk weist einen inneren und einen äußeren Teil auf, wobei jeder Teil jeweils mit einer der beiden Wellen verbunden ist. Die Wälzkörper der Tripode-Rollelemente vermitteln dabei die Kraftübertragung zwischen den beiden Wellen. Die Wälzkörper liegen sowohl an Laufflächen der Tripode-Rollelemente als auch an Laufflächen der Gelenkaußenteile an. Die Wälzkörper können durch Wälzkörperkäfige an den Tripode-Rollelementen gehalten sein. Zwischen den Wälzkörpern der Tripode-Rollelemente und den Laufflächen des äußeren Teils des Tripodegelenks befindet sich oftmals ein gewisser fertigungsbedingter Abstand. Somit liegen die Wälzkörper nicht permanent an den Laufflächen des äußeren Teils des Tripodegelenks an. Dies kann, insbesondere bei einem Wechsel der Lastrichtung der antreibenden Welle, zu einer Geräuschentwicklung führen.

Aus der DE 10 2007 059 378 A1 ist ein Tripode-Rollelement bekannt, bei dem das Gehäuse des Rollelementes mehrteilig ausgeformt ist und die Gehäuseteile des Gehäuses und der Gehäuseinnenkörper des Gehäuses durch mehrere federelastische Elemente gegeneinander verspannt werden. Dadurch werden die Wälzkörper gegen die zugehörigen Laufbahnen am äußeren Teil des Tripodegelenks gedrückt. Die Ausführungsform, bei der mehrere federelastische Elemente die Gehäuseteile gegen den Gehäuseinnenkörper verspreizen, ist jedoch aufwändig in der Herstellung und stellt hohe Anforderungen an die Ausführungsgenauigkeit. Des Weiteren stellen die mehreren federelastischen Elemente eine Schwierigkeit bei der Montage des Tripode-Rollelements dar.

Aufgabe der Erfindung ist es, ein Tripode-Rollelement eines Tripodegelenks sowie ein Tripodegelenk mit einem derartigen Rollelement bereitzustellen, die verbesserte akustische Eigenschaften aufweisen. Des Weiteren soll das erfindungsgemäße Rollelement einfach und kostengünstig in der Herstellung und der Montage ausgestaltet sein.

Diese Aufgabe wird erfindungsgemäß durch ein Rollelement eines Tripodegelenks gemäß Patentanspruch 1 sowie durch ein Tripodegelenk gemäß Patentanspruch 11 gelöst.

Gemäß einem ersten Aspekt der Erfindung wird die Aufgabe durch ein Rollelement eines Tripodegelenks gelöst. Ein Rollelement eines Tripodegelenks, das gemäß der Erfindung ausgestaltet ist, weist dabei ein Gehäuse mit einem ersten Gehäuseteil, einem zweiten Gehäuseteil und einem Gehäuseinnenkörper auf. Der Gehäuseinnenkörper ist zwischen dem ersten und zweiten Gehäuseteil gehalten und besitzt eine Aufnahmeöffnung zur Lagerung eines Zapfens eines Tripodesterns des Tripodegelenks. Dabei sind selbstverständlich die beiden Gehäuseteile derart gestaltet, dass sie die Aufnahmeöffnung im Gehäuseinnenkörper nicht verdecken. Die beiden Gehäuseteile weisen Laufbahnen auf, auf denen jeweils Wälzkörper zugeordnet sind, die zur Abstützung des Rollelements an einander gegenüberliegenden Laufbahnen eines Gelenkaußenteils des Tripodegelenks ausgestaltet sind. Der Gehäuseinnenkörper ist ferner im ersten und zweiten Gehäuseteil jeweils in einer nutartigen Aufnahme gehalten. Alternativ können beide Gehäuseteile in einer nutartigen Aufnahme des Gehäuseinnenkörpers gehalten sein. Dabei umgeben äußere Bereiche des Gehäuseinnenkörpers die beiden Gehäuseteile. Die nutartige Aufnahme des Gehäuseinnenkörpers ist bevorzugt umlaufend ausgebildet. Durch die formschlüssige Halterung des Gehäuseinnenkörpers in den beiden Gehäuseteilen ist ein Herausfallen des Gehäuseteils aus dem Gehäuse wirksam verhindert. Ferner ist ein ringförmiges Federelement zwischen dem Gehäuseinnenkörper und dem ersten und dem zweiten Gehäuseteil vorgesehen, das die Gehäuseteile gegen den Gehäuseinnenkörper verspreizt, um die Wälzkörper gegen die zugehörigen Laufbahnen des Gelenkaußenteils zu drücken. Dadurch liegen die Wälzkörper an den Laufbahnen sowohl der Gehäuseteile als auch der Gelenkaußenteile an, eine Geräuschentwicklung, insbesondere bei einem Wechsel der Lastrichtung der antreibenden Welle, kann somit verhindert werden. Das ringförmige Federelement ist dabei in einer Vertiefung an der Außenseite des Gehäuseinnenkörpers und/oder in jeweils einer Vertiefung in den nutartigen Aufnahmen der Gehäuseteile gehalten. Dabei kann die Vertiefung, sofern sie in den nutartigen Aufnahmen der Gehäuseteile vorgesehen ist, ebenfalls nutartig ausgebildet sein. Bei einer Ausgestaltung der Erfindung mit einer Vertiefung zur Halterung des ringförmigen Federelements an der Außenseite des Gehäuseinnenkörpers kann diese ebenfalls als nutartige Aufnahme oder als Abstufung an einer der Außenkanten des Gehäuseinnenkörpers ausgestaltet sein. Um eine gleichmäßige Verteilung der Federkraft des ringförmigen Federelements auf die Gehäuseteile zu gewährleisten, kann vorzugsweise vorgesehen sein, die Vertiefungen zur Halterung des ringförmigen Federelements in den Gehäuseteilen und/oder dem Gehäuseinnenkörper mittig im Bezug auf die Ausdehnung der Gehäuse entlang des Zapfen des Tripodesterns auszugestalten. Ein Verkippen und/oder ein Verkanten des erfindungsgemäßen Rollelementes in Bezug auf den Zapfen des Tripodesterns kann so vermieden werden.

In einer bevorzugten Ausgestaltung der Erfindung kann vorgesehen sein, dass das ringförmige Federelement des Rollelementes aus Federblech oder Federdraht ausgebildet ist. Aus diesen Werkstoffen kann einfach und kostengünstig ein ringförmiges Federelement hergestellt werden. Durch Variation des verwendeten Materials und/oder der Dicke des verwendeten Materials kann ebenfalls sehr einfach die Federvorspannung und damit die Federrate des ringförmigen Federelements variiert und damit an verschiedene Anforderungen angepasst werden.

Ferner kann in einer weiteren vorteilhaften Ausgestaltung des Rollelementes vorgesehen sein, dass das ringförmige Federelement ein Wellenprofil aufweist. Durch diese einfache mechanische Form des ringförmigen Federelements kann durch einfache Variation der Anzahl und/oder der Form der Wellen ebenfalls die Federvorspannung und damit die Federrate auf die Anforderungen an das Tripodegelenk eingestellt werden. So kann zum Beispiel nur durch eine höhere Anzahl von Wellen eine stärkere Fehlerrate erreicht werden. Bei sonst gleichen Bauteilen, insbesondere den in Gehäuseteilen und dem Gehäuseinnenkörper, ergibt sich somit ein Tripodegelenk mit anderen Dämpfungseigenschaften.

Eine besonders bevorzugte Ausgestaltung des Rollelementes sieht vor, dass die Flanken einer Welle des Wellenprofils geradlinig und die Übergänge von zwei Flanken verrundet sein können. Alternativ können die Flanken einer Welle des Wellenprofils gewölbt ausgebildet sein. Weitere Geometrien, wie zum Beispiel ein Sägezahnprofil, sind für das ringförmige Federelement ebenfalls denkbar. Durch die breite Gestaltungsmöglichkeit des Wellenprofils können auch vorgefertigte Federelemente als ringförmige Federelemente verwendet werden. Dadurch ergibt sich eine zusätzliche Kostenreduktion bei der Herstellung des Rollelementes und damit des Tripodegelenkes.

In einer besonders bevorzugten Ausgestaltung der Erfindung kann vorgesehen sein, dass das ringförmige Federelement des Rollelementes ein geschlitzter Dämpfungsring ist. Der Schlitz im Federring dient dabei in erster Linie zur Montage des ringförmigen Federelements. Insbesondere bei einer Ausgestaltungsvariante, bei der das ringförmige Federelement in einer Vertiefung, insbesondere einer nutartigen Vertiefung, an der Außenseite des Gehäuseinnenkörpers gehalten ist, erleichtert der Schlitz das Montieren des Bauteils. Dazu wird das ringförmige Federelement leicht aufgebogen und über den Gehäuseinnenkörper in dessen Vertiefung geschoben. In der Vertiefung schnappt das ringförmige Federelement wieder aus seiner Biegeposition zurück, es wird somit formschlüssig in der Vertiefung des Gehäuseinnenteils gehalten. Die Vertiefung kann dabei derart ausgestaltet sein, dass bei Belastung das ringförmige Federelement derart zusammengedrückt wird, dass es vollständig in der Vertiefung des Gehäuseinnenteils verschwindet. Das Gehäuseinnenteil liegt somit direkt an einem Gehäuseteil an und kann unmittelbar die Kraft der antreibenden Welle weitergeben. Dadurch wird die Kraftübertragung durch das Tripodegelenk verbessert.

Ferner kann nach einer weiteren vorteilhaften Weiterentwicklung des Rollelementes vorgesehen sein, dass der geschlitzte Dämpfungsring mehrlagig ausgeführt ist. Ein mehrlagiger, insbesondere doppellagiger, Dämpfungsring kann dabei einteilig ausgestaltet sein. Ein mehrlagiger Dämpfungsring hat den Vorteil, dass bei einem Lastwechsel, zum Beispiel einem Drehrichtungswechsel der antreibenden Welle, es zu einer Relativbewegung zwischen den Federlagen kommt. Hierbei entsteht zusätzliche Reibung, durch die Geräusche, die durch einen schlagartigen Lastwechsel entstehen, noch stärker gedämpft werden können.

Eine weitere alternative Weiterentwicklung der Erfindung sieht vor, dass der mehrlagige Dämpfungsring des Rollelementes schneckenförmig gewickelt ausgeführt ist. In dieser Bauform kann das Material des ringförmigen Federelements von innen nach außen schneckenförmig übereinander gewickelt werden. Durch diese sehr einfache Herstellungsweise kann zusätzlich der Fertigungsaufwand vermindert und damit Kosten eingespart werden.

In einer alternativen Ausgestaltung des erfindungsgemäßen Rollelementes ist das ringförmige Federelement ein geschlossener Dämpfungsring. In dieser Ausführungsform ist eine besonders gleichförmige Federkraftverteilung über den gesamten Umfang des ringförmigen Federelements erreichbar. Da bei einem geschlossenen Federring ein Aufbiegen wie beim geschlitzten Federring zur Montage nicht möglich ist, sind zwei alternative Einbaumöglichkeiten beziehungsweise deren Kombination möglich. In der ersten Alternative wird der geschlossene Federring auf den Gehäuseinnenkörper, dessen Außenfläche vorzugsweise zylinderförmig ist, aufgeschoben, in den nutartigen Aufnahmen der Gehäuseteile ist jeweils eine Vertiefung zur Aufnahme des ringförmigen Federelements vorgesehen. Alternativ dazu kann der Innenring an einer Außenkante abgestuft ausgestaltet sein. In dieser durch die Abstufung geschaffenen Vertiefung wird der geschlossene Federring sicher gehalten. Eine Kombination der beiden Haltealternativen ist ebenfalls denkbar.

In einer weiteren Ausgestaltung der Erfindung kann vorgesehen sein, dass am Rollelement ein zweites ringförmiges Federelement, das baugleich oder verschiedenartig zum ringförmigen Federelement ausgestaltet ist, parallel zum ringförmigen Federelement im Rollelement angeordnet ist. Das zweite ringförmige Federelement ist dabei in einer zweiten Vertiefung an der Außenseite des Gehäuseinnenkörpers und/oder in jeweils einer zweiten Vertiefung in den nutartigen Aufnahmen der Gehäuseteile gehalten. Durch die Verwendung eines zweiten ringförmigen Federelements kann die Federkraft bei einem Lastwechsel, zum Beispiel bei einem Wechsel der Drehrichtung der antreibenden Welle, besser verteilt werden, ohne die Vorteile, insbesondere bei der Montage, eines ringförmigen Federelements zu verlieren. Durch die baugleiche Ausgestaltung der beiden ringförmigen Federelemente kommt es zu einer sehr gleichmäßigen Lastverteilung.

In einer besonderes bevorzugten Weiterentwicklung der Erfindung kann vorgesehen sein, dass der Abstand des ringförmigen Federelements zu einer ersten Seite der zwei Gehäuseteile gleich groß ist, wie der Abstand des zweiten ringförmigen Federelements zu der der ersten Seite gegenüberliegenden zweiten Seite der zwei Gehäuseteile. Durch diese Ausgestaltung sind die beiden ringförmigen Federelemente symmetrisch im Gehäuse angebracht. Ein Verkanten des Gehäuses um den Zapfen des Tripodegelenks, insbesondere bei einem Lastwechsel durch einen Wechsel der Drehrichtung der antreibenden Welle, kann so vermieden werden. Sämtliche Vorteile durch den Einsatz eines ringförmigen Federelements bleiben auch bei dieser Ausgestaltung der Erfindung erhalten.

Gemäß einem zweiten Aspekt der Erfindung wird die Aufgabe durch ein Tripodegelenk, insbesondere durch ein Lineartripodegelenk, gelöst. Das Tripodegelenk weist dabei einen Tripodestern mit radial abstehenden Zapfen, ein Gelenkaußenteil sowie Rollelemente mit Wälzkörpern auf. Die Rollelemente sind dabei mit mindestens einem der gemäß dem ersten Aspekt der Erfindung beschriebenen Merkmale versehen. Die für die Rollelemente beschriebenen Vorteile ergeben sich somit selbstverständlich auch für das Tripodegelenk, das entsprechende Rollelemente aufweist.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein.

Es zeigen schematisch:
- Figur 1:: eine perspektivische Ansicht eines erfindungsgemäßen Rollelements ohne das erste Gehäuseteil,
- Figur 2:: eine Seitenansicht eines geschlitzten Dämpfungsrings,
- Figur 3:: ein perspektivisches Schnittbild einer weiteren Ausführungsform des erfindungsgemäßen Rollelementes,
- Figur 4:: eine Seitenansicht eines mehrlagigen Dämpfungsringes,
- Figur 5:: eine perspektivische Ansicht einer dritten Ausführungsform des erfindungsgemäßen Rollelementes ohne das erste Gehäuseteil,
- Figur 6:: eine Seitenansicht eines geschlossenen Dämpfungsringes,
- Figur 7:: eine Seitenansicht eines Schnittbildes einer weiteren Ausführungsform eines erfindungsgemäßen Rollelementes.

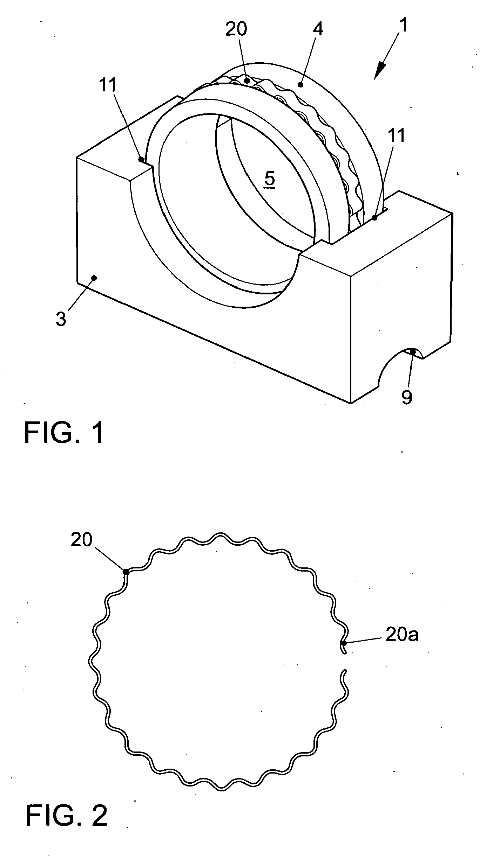

Elemente mit gleicher Funktion und Wirkungsweise sind in den Figuren 1 bis 7 jeweils mit denselben Bezugszeichen versehen.

Die Fig. 1 zeigt schematisch ein erfindungsgemäßes Rollelement 1 in einer perspektivischen Ansicht. Zur besseren Veranschaulichung ist das erste Gehäuseteil 2 nicht gezeigt. Der Gehäuseinnenkörper 4 wird am zweiten Gehäuseteil 3 in einer nutartigen Aufnahme 11 im zweiten Gehäuseteil 3 sicher gehalten. Der Gehäuseinnenkörper 4 weist ferner eine zylindrische Aufnahme 5 für den Zapfen eines Tripodegelenks auf. Am Gehäuseinnenkörper 4 ist ein ringförmiges Federelement 20 vorgesehen, das den Gehäuseinnenkörper 4 gegen das erste und das zweite Gehäuseteil 2, 3 verspreizt. Dadurch werden nicht abgebildete Wälzkörper 6, die in den Laufbahnen 8, 9 am ersten und zweiten Gehäuseteil 2, 3 angebracht sind, gegen Laufbahnen des äußeren Teils des Tripodegelenks gedrückt. Die Wälzkörper sind somit immer in Kontakt mit den Laufbahnen der Gehäuseteile 2, 3 und den Laufbahnen des äußeren Gehäuseteils. Eine Geräuschentwicklung, auch und insbesondere bei einem Lastrichtungswechsel der antreibenden Welle, kann somit sicher vermieden werden. In der gezeigten Ausführungsform wird das ringförmige Federelement 20 in einer Vertiefung am Gehäuseinnenkörper 4 gehalten. Ein Halten des ringförmigen Federelementes 20 in einer Vertiefung in den nutartigen Aufnahmen 10, 11 in den Gehäuseteilen 2, 3 ist ebenfalls denkbar.

Die Verwendung eines ringförmigen Federelementes 20 zum Verspreizen der Gehäuseteile 2, 3 gegen den Gehäuseinnenkörper 4 ist mechanisch einfach und ermöglicht eine einfache und kostengünstige Herstellung und Montage.

In Fig. 2 wird ein geschlitzter Dämpfungsring 20a gezeigt. Ein solcher geschlitzter Dämpfungsring 20a kann, zum Beispiel in einer Ausgestaltung des Rollelementes 1, wie in Fig. 1 gezeigt, als ringförmiges Federelement 20 verwendet werden. Durch eine Variation der Anzahl und Höhe der Wellen dieses geschlitzten Dämpfungsringes 20a kann die Federkraft des ringförmigen Federelementes 20 einfach auf verschiedene Anforderungen eingestellt werden.

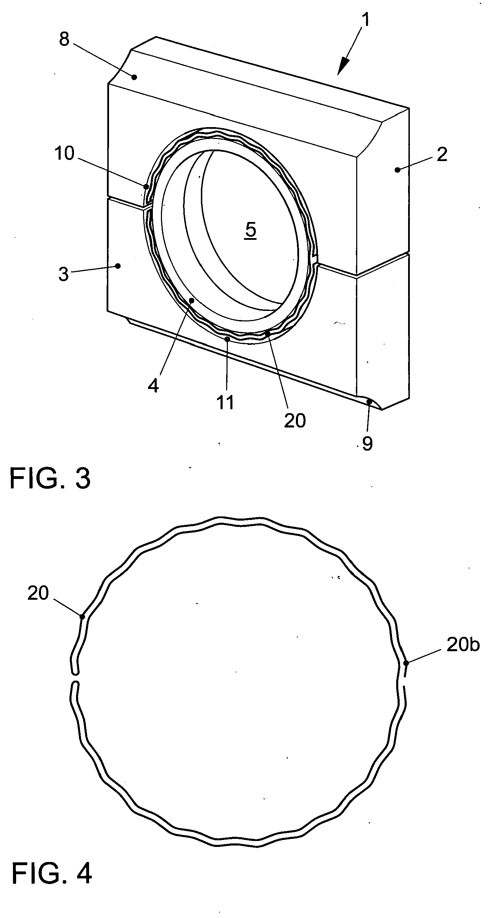

Die Fig. 3 zeigt schematisch eine weitere Ausgestaltungsform eines erfindungsgemäßen Rollelementes 1 in einer perspektivischen Schnittdarstellung. Der Schnitt ist dabei mittig zur Aufnahme 5 für den Zapfen des Tripodegelenks und senkrecht zu dessen Längsachse. Das erfindungsgemäße Rollelement 1 weist ein erstes Gehäuseteil 2, ein zweites Gehäuseteil 3 und einen Gehäuseinnenkörper 4 auf. Der Gehäuseinnenkörper 4 ist in den nutartigen Aufnahmen 10, 11 in den beiden Gehäuseteilen 2, 3 gehalten. An den Gehäuseteilen 2, 3 befinden sich Laufbahnen 8, 9 für Wälzkörper 6 (nicht mit abgebildet). Durch ein ringförmiges Federelement 20 werden die beiden Gehäuseteile 2, 3 gegen den Gehäuseinnenkörper 4 verspreizt. Dadurch werden die Wälzkörper 6 gegen die Laufbahnen des Außenteils des Tripodegelenks gedrückt. Die Wälzkörper 6 stehen dadurch jederzeit sowohl mit einem Gehäuseteil 2, 3 als auch mit dem Gelenkaußenteil des Tripodegelenkes in Verbindung. Eine Geräuschentwicklung beim Betrieb des Tripodegelenks kann so vermieden werden.

Fig. 4 zeigt einen mehrlagigen Dämpfungsring 20b, der in dem in Fig. 3 gezeigten Rollelement 1 als ringförmiges Federelement 20 verwendet wird. Ein einteilig ausgeführter doppellagig gebogener Dämpfungsring 20b hat den Vorteil, dass bei einer Federbewegung, zum Beispiel bei einem Wechsel der Drehrichtung der antreibenden Welle, es zu einer Relativbewegung zwischen den Federlagen kommt. Bei einem mehrlagigen Dämpfungsring 20b entsteht dadurch zusätzliche Reibung zwischen den Lagen, die beim Betrieb des Tripodegelenks Geräusche durch schlagartige Lastwechsel noch stärker dämpfen kann.

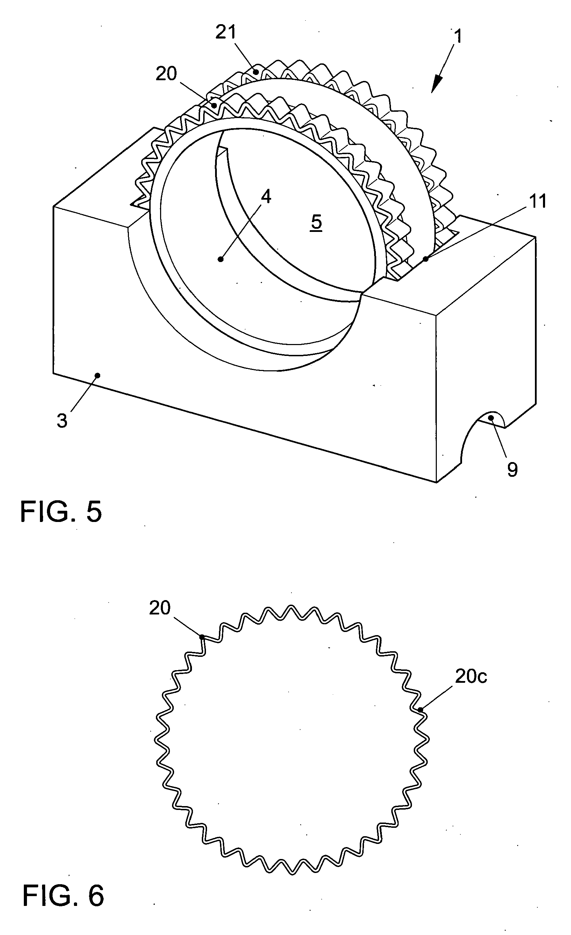

In Fig. 5 wird eine weitere Ausführungsform eines erfindungsgemäßen Rollelementes 1 gezeigt, bei dem neben einem ersten ringförmigen Federelement 20 ein zweites ringförmiges Federelement 21 verwendet wird. Die Federelemente 20, 21 werden dabei in dieser Ausführungsform in Abstufungen an den Außenkanten des Gehäuseinnenkörpers 4 gehalten. Die Innenkanten und die Innenfläche des Gehäuseinnenkörpers 4 definieren die Aufnahme 5 für den Zapfen des Tripodegelenks. In diesem Schnittbild ist auch zu sehen, dass der Gehäuseinnenkörper 4 in einer nutartigen Aufnahme 11 im zweiten Gehäuseteil 3 gehalten ist.

Das erste Gehäuseteil 2, das eine, zur nutartigen Aufnahme 11 komplementäre, nutartige Aufnahme 10 aufweist und den Gehäuseinnenkörper 4 ebenfalls umschließt, ist nicht gezeigt. Das zweite Gehäuseteil 3 weist ferner eine Laufbahn 9 für nicht abgebildete Wälzkörper 6 auf. Durch die Federwirkung der ringförmigen Federelemente 20, 21 werden der Gehäuseinnenkörper 4 gegen die beiden Gehäuseteile 2, 3 verspreizt und so die Wälzkörper 6 gegen die Laufbahnen am Außenteil des Tripodegelenks gedrückt. Die ringförmigen Federelemente 20, 21 sind symmetrisch zur Mitte des Gehäuseinnenteils 4 und damit zur Mitte des Rollelementes 1 angebracht. Dadurch wird die Belastung auf beide ringförmigen Federelemente 20, 21 gleich verteilt. Ein Verkippen und/oder ein Verkanten des erfindungsgemäßen Rollelementes 1 in Bezug auf den Zapfen des Tripodesterns kann so vermieden werden. Auch in dieser Ausführungsform des erfindungsgemäßen Rollelementes 1 kann eine Geräuschentwicklung beim Betrieb des Tripodegelenks unterdrückt werden.

In Fig. 6 wird ein geschlossener Dämpfungsring 20c gezeigt, der bei der Ausgestaltung des erfindungsgemäßen Rollelementes 1, wie es in Fig. 5 abgebildet ist, als ringförmiges und zweites ringförmiges Federelement 20, 21 verwendet wird. Durch die geschlossene Bauform des geschlossenen Dämpfungsringes 20c ergibt sich eine besonders gute Kraftverteilung entlang des ringförmigen Federelementes 20.

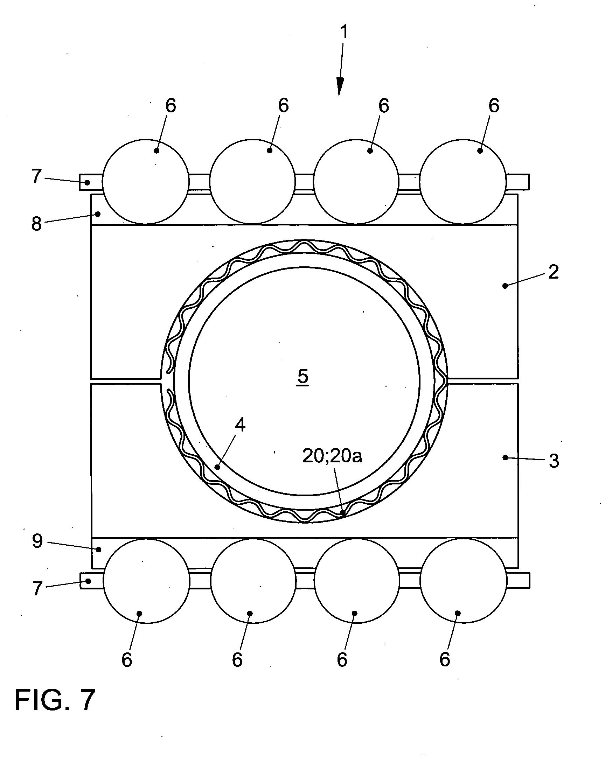

Fig. 7 zeigt ein schematisches Schnittbild durch ein erfindungsgemäßes alternatives Rollelement 1. Um den Gehäuseinnenkörper 4, der in der Mitte eine Aufnahme 5 für den Zapfen des Tripodegelenks aufweist, sind das erste und das zweite Gehäuseteil 2, 3 angebracht. Zwischen dem Gehäuseinnenkörper 4 und den beiden Gehäuseteilen 2, 3 befindet sich ein ringförmiges Federelement 20, das in dieser Ausführungsform als geschlitzter Dämpfungsring 20a ausgeformt ist. An den Laufbahnen 8, 9 des ersten und zweiten Gehäuseteils 2, 3 befinden sich Wälzkörper 6. Diese Wälzkörper 6 werden jeweils durch Wälzkörperkäfige 7 gehalten. Durch die Federkraft des ringförmigen Federelementes 20, 20a werden die beiden Gehäuseteile 2, 3 gegen den Gehäuseinnenkörper 4 verspreizt und in Folge darauf die Wälzkörper 6 gegen Laufbahnen am Außenteil des Tripodegelenks (nicht abgebildet) gedrückt. Die Wälzkörper 6 liegen somit zu jeder Zeit an den Laufbahnen des Außenteils des Tripodegelenks an. Eine Geräuschentwicklung, auch bei einem Wechsel der Lastrichtung der antreibenden Welle, kann somit wirksam vermieden werden. Durch die Verwendung eines derartigen ringförmigen Federelements 20, das eine mechanisch einfache Komponente darstellt, wird die gesamte Herstellung und die Montage des erfindungsgemäßen Rollelementes vereinfacht. Herstellungs- und Montagekosten können gesenkt werden.

Die Erfindung wurde vorstehend anhand von bevorzugten Ausführungsbeispielen näher erläutert. Sie ist jedoch nicht auf diese Ausführungsbeispiele beschränkt, sondern umfasst alle durch die Patentansprüche definierten Ausgestaltungen. Beispielsweise können beide Gehäuseteile auch in einer nutartigen Aufnahme des Gehäuseinnenkörpers gehalten sein. Dabei umgeben äußere Bereiche des Gehäuseinnenkörpers, insbesondere scheibenförmige Bereiche, die beiden Gehäuseteile zumindest teilweise.

Ohne sich auf eine Ausgestaltung des erfindungsgemäßen Rollelementes zu beziehen bringt der Einsatz eines ringförmigen Federelementes allgemein mehrere Vorteile. So ist bei jedem Rollelement nur ein ringförmiges Federelement erforderlich. Dieses Federelement kann sehr einfach in den Vertiefungen an der Außenseite des Gehäuseinnenkörpers und/oder in den nutartigen Aufnahmen der Gehäuseteile montiert werden. Der benötigte Bauraumbedarf ist somit gering. Die Vertiefungen können dabei derart ausgestaltet sein, dass bei einer Drehmomentübertragung das ringförmige Federelement in den Vertiefungen eintaucht und somit der Gehäuseinnenkörper an dem jeweiligen näheren Gehäuseteil direkt anliegt. Das ringförmige Federelement wird somit vor Überlastung, wie zum Beispiel Bruch oder plastische Verformung, geschützt. Die Reibung des ringförmigen Federelementes am Gehäuseinnenteil und an den Gehäuseteilen bewirkt eine Dämpfung, die, zusätzlich zum Anliegen der Wälzkörper an den Laufbahnen des Rollelementes und des Außenteils des Tripodegelenks, zu einer weiteren Unterdrückung von Lastwechselgeräuschen und somit zu einem verbesserten Komfortverhalten eines Tripodegelenks mit erfindungsgemäßen Rollelementen führt. Eine Variation der Federrate beziehungsweise der Federvorspannung ist durch eine Veränderung des Federquerschnitts und/oder der Federgeometrie, insbesondere durch Veränderung der Anzahl und/oder der Form der Wellen, leicht möglich.

### Bezugszeichenliste

- 1: Rollelement
- 2: erstes Gehäuseteil
- 3: zweites Gehäuseteil
- 4: Gehäuseinnenkörper
- 5: Aufnahme für den Zapfen eines Tripodegelenks
- 6: Wälzkörper
- 7: Wälzkörperkäfig
- 8: Laufbahn am ersten Gehäuseteil
- 9: Laufbahn am zweiten Gehäuseteil
- 10: nutartige Aufnahme im ersten Gehäuseteil
- 11: nutartige Aufnahme im zweiten Gehäuseteil
- 20: ringförmiges Federelement
- 20a: geschlitzter Dämpfungsring
- 20b: mehrlagiger Dämpfungsring
- 20c: geschlossener Dämpfungsring
- 21: zweites ringförmiges Federelement

## Patentansprüche

1. Rollelement (1) eines Tripodegelenks, aufweisend ein Gehäuse mit einem ersten Gehäuseteil (2), einem zweiten Gehäuseteil (3) und einem Gehäuseinnenkörper (4), welcher zwischen dem ersten und dem zweiten Gehäuseteil (2, 3) gehalten ist und der eine Aufnahmeöffnung (5) zur Lagerung eines Zapfens eines Tripodesterns des Tripodegelenks aufweist, sowie dem ersten und dem zweiten Gehäuseteil (2, 3) zugeordnete Wälzkörper (6) zur Abstützung an einander gegenüberliegenden Laufbahnen (8, 9) eines Gelenkaußenteiles des Tripodegelenks,
wobei ein Federelement (20) zwischen dem Gehäuseinnenkörper (4) und dem ersten und dem zweiten Gehäuseteil (2, 3) vorgesehen ist und
wobei das Federelement (20) die Gehäuseteile (2, 3) gegen den Gehäuseinnenkörper (4) verspreizt, um die Wälzkörper (6) gegen die zugehörigen Laufbahnen (8, 9) des Gelenkaußenteils zu drücken, **dadurch gekennzeichnet,**
**dass** der Gehäuseinnenkörper (4) im ersten und im zweiten Gehäuseteil (2, 3) jeweils in einer nutartigen Aufnahme (10, 11) gehalten ist oder dass jeweils das erste und zweite Gehäuseteil (2, 3) in einer nutartigen Aufnahme des Gehäuseinnenkörpers (4) gehalten sind und
**dass** das Federelement (20) ringförmig ist und in einer Vertiefung an der Außenseite des Gehäuseinnenkörpers (4) und/oder in jeweils einer Vertiefung in den nutartigen Aufnahmen (10, 11) der Gehäuseteile (2, 3) gehalten ist.

2. Rollelement (1) nach Anspruch 1, **dadurch gekennzeichnet, dass** das ringförmige Federelement (20) aus Federblech oder Federdraht ausgebildet ist.

3. Rollelement (1) nach einem der Ansprüche 1 oder 2, **dadurch gekennzeichnet, dass** das ringförmige Federelement (20) ein Wellenprofil aufweist.

4. Rollelement (1) nach Anspruch 3, **dadurch gekennzeichnet, dass** die Flanken einer Welle des Wellenprofils gradlinig und die Übergänge von zwei Flanken verrundet oder dass die Flanken eine Welle des Wellenprofils gewölbt ausgebildet sind.

5. Rollelement (1) nach einem der Ansprüche 1 bis 4, **dadurch gekennzeichnet, dass** das ringförmige Federelement (20) ein geschlitzter Dämpfungsring (20a) ist.

6. Rollelement (1) nach Anspruch 5, **dadurch gekennzeichnet, dass** der geschlitzte Dämpfungsring mehrlagig (20b) ausgeführt ist.

7. Rollelement (1) nach Anspruch 6, **dadurch gekennzeichnet, dass** der mehrlagige Dämpfungsring (20b) schneckenförmig gewickelt ausgeführt ist.

8. Rollelement (1) nach einem der Ansprüche 1 bis 4, **dadurch gekennzeichnet, dass** das ringförmige Federelement (20) ein geschlossener Dämpfungsring (20c) ist.

9. Rollelement (1) nach einem der Ansprüche 1 bis 8, **dadurch gekennzeichnet, dass** ein zweites ringförmiges Federelement (21) vorgesehen ist, das baugleich oder verschiedenartig zum ringförmigen Federelement (20) ausgestaltet und parallel zum ringförmigen Federelement (20) angeordnet ist, wobei das zweite ringförmige Federelement (21) in einer zweiten Vertiefung an der Außenseite des Gehäuseinnenkörpers (4) und/oder in jeweils einer zweiten Vertiefung in den nutartigen Aufnahmen (10, 11) der Gehäuseteile (2, 3) gehalten ist.

10. Rollelement (1) nach Anspruch 9, **dadurch gekennzeichnet, dass** der Abstand des ringförmigen Federelementes (20) zu einer ersten Seite der zwei Gehäuseteile (2, 3) gleich groß ist, wie der Abstand des zweiten ringförmigen Federelementes (21) zu der der ersten Seite gegenüberliegenden zweiten Seite der zwei Gehäuseteile (2, 3).

11. Tripodegelenk, insbesondere ein Lineartripodegelenk, aufweisend einen Tripodestern mit radial abstehenden Zapfen, ein Gelenkaußenteil sowie Rollelemente (1) mit Wälzkörpern (6),
**dadurch gekennzeichnet,**
**dass** die Rollelemente (1) gemäß wenigstens einem der Ansprüche 1 bis 10 ausgebildet sind.

## Claims

1. Rolling element (1) of a tripod joint, having a housing with a first housing part (2), a second housing part (3) and a housing inner body (4) which is held between the first and the second housing part (2, 3) and which has a receiving opening (5) for mounting a pin of a tripod star of the tripod joint, and rolling bodies (6) which are assigned to the first and the second housing part (2, 3) for support on raceways (8, 9) of a joint outer part of the tripod joint which lie opposite one another, a spring element (20) being provided between the housing inner body (4) and the first and the second housing part (2, 3), and the spring element (20) spreading the housing parts (2, 3) against the housing inner body (4), in order to press the rolling bodies (6) against the associated raceways (8, 9) of the joint outer part, **characterized in that** the housing inner body (4) is held in the first and in the second housing part (2, 3) in each case in a groove-like receptacle (10, 11), or **in that** in each case the first and second housing part (2, 3) are held in a groove-like receptacle of the housing inner body (4), and **in that** the spring element (20) is annular and is held in a depression on the outer side of the housing inner body (4) and/or in in each case one depression in the groove-like receptacles (10, 11) of the housing parts (2, 3).

2. Rolling element (1) according to Claim 1, **characterized in that** the annular spring element (20) is configured from spring plate or spring wire.

3. Rolling element (1) according to either of Claims 1 and 2, **characterized in that** the annular spring element (20) has a corrugated profile.

4. Rolling element (1) according to Claim 3, **characterized in that** the flanks of a corrugation of the corrugation profile are of rectilinear configuration and the transitions of two flanks are of rounded configuration, or **in that** the flanks of a corrugation of the corrugation profile are of arched configuration.

5. Rolling element (1) according to one of Claims 1 to 4, **characterized in that** the annular spring element (20) is a slotted damping ring (20a).

6. Rolling element (1) according to Claim 5, **characterized in that** the slotted damping ring is of multiple-layer (20b) configuration.

7. Rolling element (1) according to Claim 6, **characterized in that** the multiple-layer damping ring (20b) is of helically wound configuration.

8. Rolling element (1) according to one of Claims 1 to 4, **characterized in that** the annular spring element (20) is a closed damping ring (20c).

9. Rolling element (1) according to one of Claims 1 to 8, **characterized in that** a second annular spring element (21) is provided which is designed to be structurally identical to or different from the annular spring element (20) and is arranged parallel to the annular spring element (20), the second annular spring element (21) being held in a second depression on the outer side of the housing inner body (4) and/or in in each case a second depression in the groove-like receptacles (10, 11) of the housing parts (2, 3).

10. Rolling element (1) according to Claim 9, **characterized in that** the spacing of the annular spring element (20) from a first side of the two housing parts (2, 3) is as great as the spacing of the second annular spring element (21) from the second side of the two housing parts (2, 3) which lies opposite the first side.

11. Tripod joint, in particular a linear tripod joint, having a tripod star with radially protruding pins, a joint outer part and rolling elements (1) with rolling bodies (6), **characterized in that** the rolling elements (1) are configured according to at least one of Claims 1 to 10.

## Revendications

1. Elément de roulement (1) d'une articulation à tripode, présentant un boîtier avec une première partie de boîtier (2), une deuxième partie de boîtier (3) et un corps intérieur de boîtier (4), qui est retenu entre la première et la deuxième partie de boîtier (2, 3) et qui présente une ouverture de réception (5) pour le support sur palier d'un tourillon d'une étoile de tripode de l'articulation à tripode, ainsi que des corps de roulement (6) associés à la première et à la deuxième partie de boîtier (2, 3) pour le support sur des pistes de roulement mutuellement opposées (8, 9) d'une partie extérieure d'articulation de l'articulation à tripode, un élément de ressort (20) étant prévu entre le corps intérieur de boîtier (4) et la première et la deuxième partie de boîtier (2, 3) et l'élément de ressort (20) écartant les parties de boîtier (2, 3) contre le corps intérieur de boîtier (4) afin de presser les corps de roulement (6) contre les pistes de roulement associées (8, 9) de la partie extérieure d'articulation,
**caractérisé en ce que**
le corps intérieur de boîtier (4) est retenu dans la première et la deuxième partie de boîtier (2, 3) à chaque fois dans un logement de type rainure (10, 11) ou **en ce qu'**à chaque fois la première et la deuxième partie de boîtier (2, 3) sont retenues dans un logement de type rainure du corps intérieur de boîtier (4) et **en ce que** l'élément de ressort (20) est de forme annulaire et est retenu dans un renfoncement au niveau du côté extérieur du corps intérieur de boîtier (4) et/ou dans un renfoncement respectif dans les logements de type rainure (10, 11) des parties de boîtier (2, 3).

2. Elément de roulement (1) selon la revendication 1, **caractérisé en ce que** l'élément de ressort de forme annulaire (20) est réalisé en tôle à ressort ou en fil d'acier à ressort.

3. Elément de roulement (1) selon l'une quelconque des revendications 1 ou 2, **caractérisé en ce que** l'élément de ressort de forme annulaire (20) présente un profil ondulé.

4. Elément de roulement (1) selon la revendication 3, **caractérisé en ce que** les flancs d'une ondulation du profil ondulé sont droits et les transitions entre deux flancs sont arrondies ou **en ce que** les flancs d'une ondulation du profil ondulé sont réalisés sous forme cintrée.

5. Elément de roulement (1) selon l'une quelconque des revendications 1 à 4, **caractérisé en ce que** l'élément de ressort de forme annulaire (20) est une bague d'amortissement fendue (20a).

6. Elément de roulement (1) selon la revendication 5, **caractérisé en ce que** la bague d'amortissement fendue est réalisée avec plusieurs couches (20b).

7. Elément de roulement (1) selon la revendication 6, **caractérisé en ce que** la bague d'amortissement avec plusieurs couches (20b) est réalisée sous forme enroulée en serpentin.

8. Elément de roulement (1) selon l'une quelconque des revendications 1 à 4, **caractérisé en ce que** l'élément de ressort de forme annulaire (20) est une bague d'amortissement fermée (20c).

9. Elément de roulement (1) selon l'une quelconque des revendications 1 à 8, **caractérisé en ce qu'**un deuxième élément de ressort de forme annulaire (21) est prévu, lequel est configuré avec la même construction ou différemment par rapport à l'élément de ressort de forme annulaire (20), et est disposé parallèlement à l'élément de ressort de forme annulaire (20), le deuxième élément de ressort de forme annulaire (21) étant retenu dans un deuxième renfoncement au niveau du côté extérieur du corps intérieur de boîtier (4) et/ou dans un deuxième renfoncement respectif dans les logements de type rainure (10, 11) des parties de boîtier (2, 3).

10. Elément de roulement (1) selon la revendication 9, **caractérisé en ce que** la distance de l'élément de ressort de forme annulaire (20) à un premier côté des deux parties de boîtier (2, 3) est identique à la distance du deuxième élément de ressort de forme annulaire (21) au deuxième côté des deux parties de, boîtier (2, 3) opposé au premier côté.

11. Articulation à tripode, en particulier articulation à tripode linéaire, présentant une étoile de tripode avec des tourillons saillant radialement, une partie extérieure d'articulation ainsi que des éléments de roulement (1) avec des corps de roulement (6), **caractérisée en ce que** les éléments de roulement (1) sont réalisés selon au moins l'une quelconque des revendications 1 à 10.
